**Europäisches Patentamt**

**European Patent Office**

**Office européen des brevets**

(19)

(11) Veröffentlichungsnummer: **0 211 404**
**A2**

(12)

# EUROPÄISCHE PATENTANMELDUNG

(21) Anmeldenummer: **86110572.4**

(22) Anmeldetag: **31.07.86**

(51) Int. Cl.⁴: **B 65 H 31/30**

(30) Priorität: **03.08.85 DE 3527902**

(43) Veröffentlichungstag der Anmeldung:
**25.02.87 Patentblatt 87/9**

(84) Benannte Vertragsstaaten:
**AT CH DE FR GB IT LI NL SE**

(71) Anmelder: **Mohndruck Graphische Betriebe GmbH**
**Carl-Bertelsmann-Strasse 161**
**D-4830 Gütersloh 1(DE)**

(72) Erfinder: **Kwauka, Gerd-Georg, Dr.**
**Sebastianweg 15**
**D-4830 Gütersloh(DE)**

(74) Vertreter: **Patentanwälte Dr. Solf & Zapf**
**Schlossbleiche 20 Postfach 13 01 13**
**D-5600 Wuppertal 1(DE)**

(54) **Vorrichtung und Verfahren zum Stapeln und/oder Palettieren von insbesondere dünnen Produkten eines Druckereibetriebes.**

(57) Die Erfindung betrifft eine Vorrichtung zum Stapeln und/oder Palettieren von insbesondere dünnen Produkten eines Druckereibetriebes, die durch eine um eine vertikale Achse drehbare Sammel- und Ablegestation gekennzeichnet ist. Die Erfindung betrifft ferner ein Verfahren, vorzugsweise unter Verwendung der Vorrichtung, wobei die Produkte zur Bildung eines Vorstapels um eine zur Ebene der Produkte senkrechte Achse gedreht und anschließend aufeinanderliegend zum Stapel gesammelt werden, der Stapel in eine senkrecht unter dem Stapel angeordneten Ablegeschacht übergeben, im Ablegeschacht um mindestens die vorherige Drehung um dieselbe Achse zurückgedreht oder um 90, 180, 270° zuzüglich oder abzüglich der Vordrehung gedreht und danach abgelegt wird.

EP 0 211 404 A2

- 1 -

Vorrichtung und Verfahren zum Stapeln und/oder Palettieren von insbesondere dünnen Produkten eines Druckereibetriebes

Die Erfindung betrifft eine Vorrichtung und ein Verfahren zum Stapeln und/ oder Palettieren von insbesondere dünnen Produkten eines Druckereibetriebes wie Blätter, Bogen und Hefte, z.B. Falzbogen, Prospekte, Kataloge und Zeitschriften.

Bekannt ist ein Verfahren, bei dem Falzbogen im Schuppenstrom über ein Zuführband antransportiert und in einen Schacht, der im wesentlichen die Abmessungen der Falzbogen hat, abgelegt werden. Nach Bildung eines Stapels von Falzbogen im Schacht wird der Stapel mit Greifarmen aus dem Schacht genommen und auf einem anderen Stapel oder einer Palette abgesetzt. Durch die Anordnung der Greifarme,zwischen denen der Falzbogenstapel gehalten wird, kann es beim Ablegen und Zurückziehen der Greifarme zu Verschiebungen der einzelnen Falzbogen gegeneinander und/oder zu einer nicht ausreichend ausgerichteten Ablage auf einem zuvor abgelegten Stapel kommen.

- 2 -

Eine andere Stapelvorrichtung für leicht verformbare
Güter z.B. Zeitschriften (DE-OS 30 24 133) ist so ausgebildet, daß beim Zurückziehen des Tragorgans das
Transportgut unbeeinflußt bleibt, d.h. beim Zurückziehen nach außen unter dem abgesetzten Stapel hervor
infolge Haftung und Reibung das unterste Blatt des
transportierten und/oder das oberste Blatt des bereits
abgesetzten Stapels nicht mitgenommen oder beschädigt
wird. Zu diesem Zweck wird als Tragorgan ein Doppelwälzbandsystem verwendet, dessen das Produkt kontaktierende Trums abgewälzt werden.

Bei einer Palettiervorrichtung für Buchblocks oder Bücher
(P 34 11 295) ist vorgeschlagen worden, eine Einrichtung
zur Aufnahme einer Produktlage zu verwenden, die ebenfalls aus einem Doppelwälzbandsystem besteht. Die Bänder
des Doppelwälzbandes werden beim Zurückziehen gegenläufig
angetrieben derart, daß der obere Trum des Oberbandes
und der untere Trum des Unterbandes abgewälzt werden,
wobei zumindest das Oberband beim Vorschieben des Doppelwälzbandes relativ dazu stillsteht.

Mit den bekannten Vorrichtungen kann man zwar Stapel
produktschonend absetzen oder Produktreihen oder -lagen
schonend palettieren und beim Palettieren Lücken bilden
und/oder nach vorherigem Drehen der einzelnen Produkte während des
Transports zur Vorrichtung im Verbund palettieren, mit den Vorrichtungen kann man aber nicht alle gegebenenfalls erforderlichen Verbundmuster beim Palettieren oder Positionen der übereinanderliegenden Produkte im Stapel vorsehen, die eine statisch
sicherere Lagerung auf einer Palette oder eine bessere
Quaderform der Stapel gewährleisten. Bei dünnen Produkten
ist es außerdem bisher nicht gelungen, einstufig,d.h. ohne
Zwischenstapel, zu palettieren.

- 3 -

Aufgabe der Erfindung ist, eine Vorrichtung zum Stapeln und/oder Palettieren von insbesondere dünnen Produkten aus Druckereibetrieben zu schaffen, mit der einstufig sehr genau an beliebiger Stelle auf z.B. einer Palette ein Stapel von Produkten in beliebig gedrehter Stellung positioniert werden kann.

Diese Aufgabe wird durch die Merkmale des Hauptanspruchs gelöst. Vorteilhafte Ausführungsformen der Erfindung werden in den Unteransprüchen gekennzeichnet. Anhand der Zeichnung wird im folgenden ein Ausführungsbeispiel beschrieben. Es zeigen:

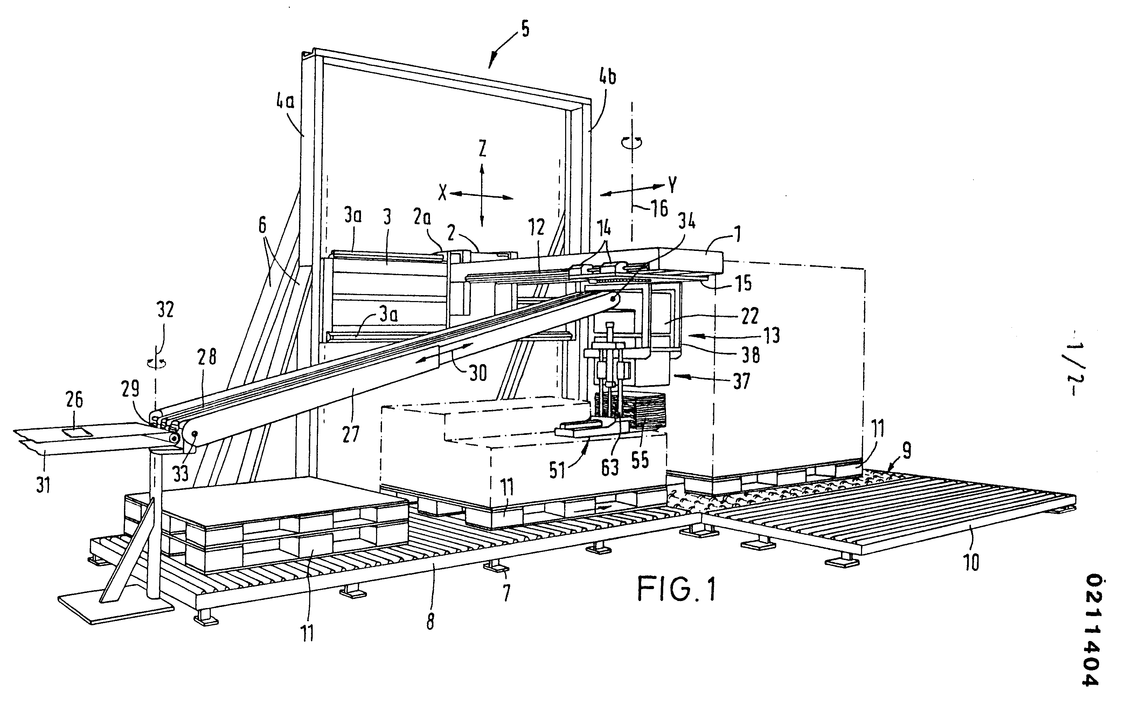

Fig. 1   eine perspektivische Ansicht der Vorrichtung,

Fig. 2   eine Explosionsdarstellung des Aufbaus der Ablegestation teilweise im Schnitt.

Die erfindungsgemäße Vorrichtung zum Stapeln und/oder Palettieren weist vorzugsweise einen sich horizontal erstreckenden Tragarm 1 auf. Der Tragarm 1 stößt mit einem Ende frontal gegen eine vertikal angeordnete, etwa plattenförmig ausgebildete Traverse 2 und ist mit dieser fest verbunden. Die Traverse 2 besitzt horizontal ausgerichtete Schienenlager 2a. Die Schienenlager 2a sitzen auf sich ebenfalls horizontal erstreckenden Schienen 3a eines Schlittens 3, der im wesentlichen aus einem senkrechtstehenden, von der Seite des Tragarms betrachtet, rechteckigen Steg besteht, an dem z.B. oben und unten die Schienen 3a befestigt sind, wobei die Schienen 3a über die Schienenlager 2a die Traverse 2 mit dem Tragarm 1 tragen, und wobei die Traverse in

- 4 -

Richtung des Doppelpfeils X hin- und herverfahrbar auf den Schienen 3a lagert. Zum Verfahren der Traverse 2 mit Tragarm 1 sind an sich bekannte Antriebsmittel vorgesehen, die nicht dargestellt sind, damit die Übersichtlichkeit der Zeichnung erhalten bleibt.

Der Schlitten 3 lagert jeweils endseitig in Richtung des Doppelpfeils Z auf- und abverfahrbar in oder an den vertikal stehenden Säulen 4a, 4b eines Maschinenrahmens 5, der auf dem Boden steht oder dort gelagert ist, wozu entsprechende Verstrebungen 6 und Lagerelemente dienen. Nicht dargestellte Antriebsmittel sorgen für das Verfahren des Schlittens 3 in Doppelpfeilrichtung Z.

Der Maschinenrahmen 5 ist zweckmäßigerweise mit einer vor den Säulen 4a, 4b unter dem Tragarm 1 auf dem Boden z.B. mit Stützen 7 ruhenden, sich quer bzw. senkrecht zum Tragarm 1 erstreckenden Rollenbahn 8 kombiniert, die vorzugsweise länger ausgeführt ist als der Abstand der Säulen 4a, b voneinander beträgt, aber sich nur einseitig länger erstreckt, und zwar über die Säule 4a hinaus. An die Rollenbahn 8 kann sich anderendig, also über die Säule 4b hinausreichend, eine Röllchenbahn 9 anschließen und rechtwinklig dazu eine weitere Rollenbahn 10 angesetzt sein. Die Breite der Rollenbahn 8, 10 sowie der Röllchenbahn 9 entspricht etwa der Länge des frei über die Rollenbahn 8 kragenden Tragarms 1. Die Länge des Tragarms 1 ist so gewählt, daß der Tragarm zumindest eine auf der Rollenbahn 8 befindliche Palette 11 überkragen kann.

Unter dem Tragarm 1 hängt die Sammel-und Ablegestation 13. Zu diesem Zweck sind an den Längsseiten des Tragarms 1 Führungsschienen 12 angeordnet, an denen Gleitböcke 14 gelagert sind, die auf einer horizontal angeordneten Tragplatte 15 befestigt sind. Die Tragplatte 15 befindet sich mit geringem Abstand unter dem Tragarm 1 und unter ihr befindet sich die Sammel-und Ablegestation 13.

Die Gleitböcke 14 stehen mit nicht dargestellten Antriebsmitteln in Verbindung, so daß die Sammel-und Ablegestation 13 in Doppelpfeilrichtung Y verfahrbar ist.

Wesentlich ist, daß die Sammel-und Ablegestation 13 um eine vertikale Achse 16 drehbar, vorzugsweise so gelagert ist, daß sie um die vertikale Achse 16 positionsgenau um 90$^o$ nach jeder Seite, vorzugsweise auch um 180$^o$, nach einer oder nach beiden Seiten und/oder auch um 270$^o$ nach einer oder beiden Seiten gedreht werden kann, so daß die darin befindlichen Produkte eine entsprechend gedrehte Lage einnehmen können.

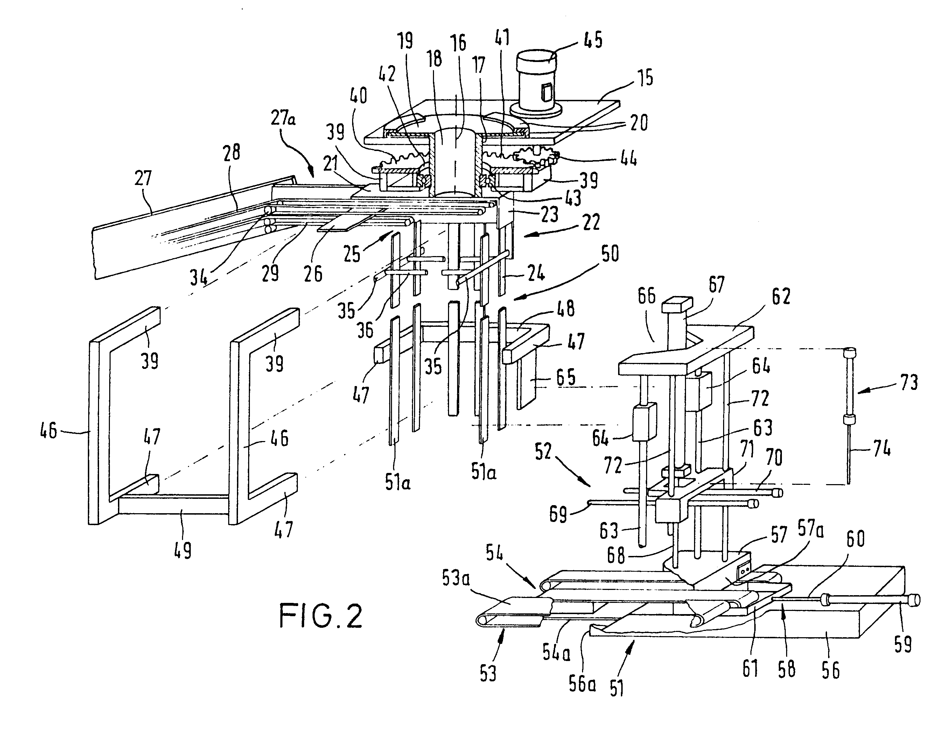

Eine bevorzugte Ausführungsform der Sammel-und Ablegestation 13 sieht untereinander gereiht einen Vorstapelschacht 22 und einen Ablegeschacht 37 vor, von denen der Vorstapelschacht 22 um einen Schleppwinkel von etwa 0 bis 10° nach beiden Seiten schwenkbar und der Ablegeschacht 37 um 90 bzw. 180 bzw. 270°, vorzugsweise nach beiden Seiten, einschließlich der Kompensation des Schleppwinkels, so daß sich der Ablegeschacht zuzüglich oder abzüglich des Schleppwinkels dreht, verdrehbar um die Achse 16 gelagert sind. Ein bevorzugter Aufbau einer solchen Ausführungsform der Sammel-und Ablegestation 13 ergibt sich beispielhaft aus Fig. 2. Dabei befindet sich in der Tragplatte 15 ein Loch 17, das frei von einem Tragrohr 18 durchgriffen wird, das sich ein Stück weiter nach unten erstreckt. Am oberen Ende des Tragrohrs 18 sitzt eine Kreisringscheibe 19, die sich rechtwinklig zur Achse 16 erstreckt und sich auf der Oberfläche der Tragplatte 15 abstützt. Die Kreisringscheibe 19 weist Gleitmittel 20 auf, die sich zwischen der Scheibe 19 und der Oberfläche der Tragplatte 15 befinden und die Reibung vermindern, wenn die Scheibe 19 sich um die Achse 16 dreht. Anstelle der Gleitmittel können auch Drehlager oder dgl. vorgesehen sein.

Am unteren Ende des Tragrohrs 18 sitzt frontal eine Tragplatte 21, unter der sich der Vorstapelschacht 22 befindet. Dieser Vorstapelschacht 22 wird im wesentlichen durch einen vertikalen, unter der Tragplatte 21 sitzenden, U-förmigen Rahmen 23 gebildet, an dessen Seitenwandungen senkrecht nach unten ragend Begrenzungsstäbe 24 befestigt sind, so daß sich eine Art Innenraum für den Vorstapelschacht 22 ergibt, dessen Boden offen ist.

An einer Seite des Vorstapelschachts 22, an der die Produkte zugeführt werden sollen, ist eine Art Schlitz 25 vorgesehen, durch den Produkte in den Innenraum des Vorstapelschachts 22 gefördert werden sollen.

Zum Antransport der Produkte 26 dient nach einer vorteilhaften Ausführungsform der Erfindung ein teleskopartig aufgebautes, in Doppelpfeilrichtung 30 verlängerbares bzw. verkürzbares Zuführtransportband 27 mit einem Oberbandsystem 28 und einem Unterbandsystem 29. Das Zuführtransportband 27 erstreckt sich in Richtung der Rollenbahn 8 über die Rollenbahn und übernimmt die Produkte 26 von einem vorgeordneten Transportband 31, wobei die Produkte 26 zwischen dem Ober- und Unterbandsystem klemmend zum Schlitz 25 des Vorstapelschachts 22 transportiert werden.

Wesentlich ist, daß das Zuführtransportband 27 im Bereich des Übergangs vom Transportband 31 um eine vertikale Achse 32 und um eine quer zur Längserstreckung des Bandes liegende, horizontale Achse 33 schwenkbar gelagert ist. Zudem ist das andere Ende des Zuführtransportbandes 27 am Vorstapelschacht 22 mit diesem um die Achse 16 drehbar gelagert, und zwar um eine ebenfalls quer zur Längserstreckung des Zuführtransportbandes 27 liegende, horizontale Achse 34 schwenkbar. Vorteilhaft ist, wenn das Zuführtransportband 27 zwischen der Achse 34 und dem Vorstapelschacht 22 einen horizontal angeordneten Bereich 27a bis zum Vorstapelschacht 22 reichend aufweist, so daß die Produkte in horizontaler Lage zum Vorstapelschacht 22 gelangen. Vorzugsweise endet das Unterbandsystem 29 am Schlitz 25, während das Oberbandsystem 28 in den Innenraum des Vorstapelschachts 22 ragt (Fig. 2).

Aus der oben beschriebenen Anordnung und Lagerung des Zuführtransportbandes 27 und des Vorstapelschachts 22 resultiert, daß beim Verfahren des Tragarms 1 in X- und Z-Richtung das sich am Einlauf abstützende Teleskopband 27 in seiner Länge entsprechend verändern und um die Achsen 33 und 34 kippen und um die Achsen 16 und 32 schwenken kann. Beim Verfahren der Sammel- und Ablegestation 13 am Tragarm 1 in Y-Richtung kann der Vorstapelschacht um die Achse 16 schwenken, wobei das am Vorstapelschacht 22 sitzende Teleskopband 27 um die Achse 32 schwenkt.

- 8 -

Zweckmäßigerweise wird im Vorstapelschacht 22 ein entfernbares Bodenlager für die Produkte angeordnet, so daß aus den einzeln antransportierten Produkten im Vorstapelschacht 22 ein Stapel gebildet werden kann. Vorzugsweise weist das Bodenlager zwei horizontale, sich gegenüberliegende, außerhalb des Vorstapelschachts 22 angeordnete Schwenklagerzapfen 35 auf, an denen senkrecht abgehend Finger 36 angeordnet sind, die die Zwischenräume zwischen den Stäben 24 durchgreifen und horizontal in den Vorstapelschacht 22 hineinragen. Auf diesen Fingern 36 ruhen die Produkte während der Stapelbildung. Ein Verschwenken der Finger 36 um den jeweiligen Schwenklagerzapfen 35 nach unten gibt den Stapel frei, der dann in den darunter befindlichen Ablegeschacht 37 rutscht. Für diesen Zweck stehen die Schwenklagerzapfen 35 mit entsprechenden Antriebsmitteln in Verbindung (nicht dargestellt), die entweder ein Verschwenken der Finger 36 um $90^{\circ}$ ab und auf oder um $360^{\circ}$ bewirken.

Der Ablegeschacht 37 ist um die vertikale Achse 16 um $90^{\circ}$ oder $180^{\circ}$ oder $270^{\circ}$, vorzugsweise nach beiden Seiten, zuzüglich oder abzüglich des Schleppwinkels des Vorstapelschachts verdrehbar, so daß darin befindliche Produkte vor dem Ablegen entsprechend gedreht sind. Für diesen Zweck sieht eine vorteilhafte Ausführungsform der Erfindung vor, daß zwischen der Tragplatte 15 und der Tragplatte 21 ein Freiraum belassen ist, wobei außen am Tragrohr 18 drehbar um die vertikale Achse 16 ein Hängerahmen 38 lagert, der die Vorstapelschachtanordnung umgreift und den Ablegeschacht 37 bildet bzw. trägt. Dieser Hängerahmen 38 weist zwei horizontale, parallel auf Abstand beiderseits neben dem Tragrohr 18 angeordnete, obere Längsholme 39 auf. Auf den Holmen 39 ist eine Kreisringscheibe 40 horizontalliegend befestigt, die außenseitig
eine Verzahnung 41 trägt. Die zentrale Öffnung 42 der
Kreisringscheibe 40 wird vom Tragrohr 18 frei durchgriffen, wobei aber zwischen Kreisringscheibe 40 und
Tragrohr 18 ein Drehtraglager z.B. in Form eines Kugellagers 43 angeordnet ist, das sowohl an der Kreisringscheibe 40 als auch am Tragrohr 18 festsitzt, so daß
das Tragrohr 18 den Hängerahmen 38 um die vertikale
Achse 16 drehbar lagert. In den Zahnkranz 41 kann ein
Antriebszahnrad 44 eines Antriebsmittels, z.B. eines
Motors 45, greifen, der z.B. auf der Tragplatte 15 sitzt.

An dem einen Ende der oberen Längsholme 39 ist je ein
vertikaler Distanzholm 46 angeordnet, der am unteren
Ende in jeweils einen unteren horizontalen Längsholm
47 übergeht. Die unteren Längsholme 47 verlaufen fluchtend unter den oberen Längsholmen 39. Vorzugsweise stehen
aus Stabilitätsgründen die Enden der unteren Längsholme
47 über einen Querholm 48 miteinander in Verbindung.
Ein entsprechender Querholm kann auch für die oberen
Längsholme 39 vorgesehen sein. Außerdem ist zweckmäßig,
einen weiteren Querholm 49 zwischen den unteren Längsholmen 47 im Bereich der rückwärtigen vertikalen Holme
46 einzubringen. Von der Seite betrachtet, ist der Hängerahmen 38 im wesentlichen C-förmig ausgebildet, so daß
der Innenraum des Hängerahmens 38 von vorne und von
beiden Seiten zugängig bzw. offen ist, was durch den
Pfeil 50 angedeutet wird.

- 10 -

Zur Bildung des Ablegeschachts 37 sind, wie beim Vorstapelschacht 22, vertikale Stäbe 51 a innenseitig an den unteren Längsholmen 47 befestigt. Die auf Abstand angeordneten Stäbe 51 a fluchten vorzugsweise mit den Stäben 24 des Vorstapelschachts 22.

Den Boden des Ablegeschachts 37 bildet vorzugsweise eine z.B. am Hängerahmen 38 und/oder Ablegeschacht 37 gelagerte Wälzbandeinrichtung 51 mit vor- und zurückfahrbaren, horizontal ausgerichteten Wälzbändern. Die Wälzbandeinrichtung 51 ist zweckmäßigerweise auch auf- und abfahrbar gelagert und weist zudem eine Niederhalteeinrichtung 52 für den gebildeten Stapel auf, die über vor- und zurückfahrbare Niederhalter verfügt und vorzugsweise an der Wälzbandeinrichtung 51 auf- und abfahrbar gelagert ist. Zweckmäßigerweise ist die Wälzbandeinrichtung 51 mit einem Doppelwälzband ausgerüstet, und zwar im einfachsten Fall mit zwei oberen Wälzbändern 53 für die Auflage des gebildeten Stapels 55 und ein unteres Wälzband 54 für das Niederhalten des Stapels, auf den abgelegt werden soll.

Das dargestellte Doppelwälzband weist zwei obere, seitlich auf Abstand angeordnete Wälzbänder 53 und zwischen diesen ein unteres, etwas nach unten versetzt angeordnetes Wälzband 54 auf. Es können selbstverständlich mehr als zwei obere Wälzbänder und mehr als ein unteres Wälzband vorgesehen sein. Die Anordnung und Führung ist jedoch, wie an sich bekannt, derart, daß der obere Trum 53a der oberen Wälzbänder 53 und der untere Trum 54a des unteren Wälzbandes 54 beim Zurückziehen der

- 11 -

Wälzbänder stillstehen, d.h. abgewälzt werden, so daß keine Relativbewegungen zwischen den Produktoberflächen und den genannten Trums stattfinden beim Ablegen des im Ablegeschacht 37 befindlichen Stapels 55.

Die Bänder 53, 54 der Wälzbandeinrichtung 51 können auf bzw. an einer Lagerplatte 56 lagern, über der sich eine weitere kürzere, sich auf der ersteren abstützenden Lagerplatte 57 befindet. An der Rückwandung 57a der Lagerplatte 57 können z.B. die oberen Wälzbänder 53 und an der Vorderfront 56a der Lagerplatte 56 das untere Wälzband 54 befestigt sein. Die sich bewegenden Trums der Wälzbänder 53, 54 oder die Lagerelemente der Bänder stehen mit einer Zug- bzw. Schubeinrichtung 58 in Verbindung, die aus einer auf der Lagerplatte 56 befestigten Kolbenzylindereinheit 59 bestehen kann, deren Kolbenstange 60 an einem mit den sich bewegenden Trums in Verbindung stehenden Bügel 61 sitzt. Die Mittel zum Betreiben der Kolbenzylindereinheit 59 sind nicht dargestellt.

Die Wälzbandeinrichtung 51 wird durch eine außenliegende, seitliche Anordnung am Hängerahmen 38 getragen. Dafür sind z.B. Gleitstangen 63 vorgesehen, die auf seitlichem Abstand voneinander angeordnet sind und mit ihrem unteren Ende in der Lagerplatte 57 und mit ihrem oberen Ende in einer in der Draufsicht U-förmigen Traverse 62 stecken. Die Gleitstangen 63 durchgreifen je einen Gleitblock 64. Die Gleitblöcke 64 sind an einem der unteren Längsholme 47 oder an daran sitzenden, nach unten ragenden Lagerplatten 65 befestigt.

- 12 -

Die etwa U-förmige Ausnehmung 66 der Traverse 62 wird von einer vertikal angeordneten, sich z.B. an der Traverse 62 oder am Hängerahmen 38 abstützenden Kolbenzylindereinheit 67 durchgriffen, wobei die nach unten herausragende Kolbenstange 68 der Kolbenzylindereinheit 67 mit der Lagerplatte 57 verbunden ist. Durch eine entsprechende Beaufschlagung der Kolbenzylindereinheit 67 mit nicht dargestellten, an sich bekannten Mitteln, kann die Wälzbandeinrichtung 51 angehoben oder abgesenkt werden, wobei die Gleitstangen 63 in den Gleitblöcken 64 gleiten. Zwischen den Stäben 51a des Ablegeschachts 37 sind entsprechende Zwischenräume vorgesehen, die von den Wälzbändern frei durchgriffen werden können, so daß sie in den Innenraum des Ablegeschachts 37 horizontal hinein- und heraus- sowie ungehindert auch auf- und abgefahren werden können, wenn sie sich im Ablegeschacht 37 befinden.

Zweckmäßigerweise ist die Wälzbandeinrichtung 51, wie bereits erwähnt, mit einer Niederhalteeinrichtung 52 ausgerüstet, die z.B. über den Wälzbändern 53, 54 horizontal angeordnete, in Längsrichtung der Bänder weisende Stangen 69 aufweisen kann. Jeder Stab 69 sitzt z.B. am Kolben einer Kolbenzylindereinheit 70, die horizontal an einer Traverse 71 lagert, die sich unter der Traverse 62 befindet und auf- und abfahrbar gelagert ist. Mit nicht dargestellten, an sich bekannten Antriebsmitteln können die Kolbenzylindereinheiten 70 betrieben werden, so daß die Stangen 69 vor- und zurückverfahrbar sind. Die Lagerung der Niederhalteeinrichtung 52 erfolgt an Gleitstangen 72, die auf Abstand voneinander und von den Gleitstangen 63 angeordnet sind, die Traverse 71 durchgreifen und ebenfalls in der Traverse 62 sowie in der Tragplatte 57 stecken. Für die Auf- und Abbewegung ist eine weitere Kolbenzylindereinheit 73 vorgesehen, die vertikal nach unten ragend unter oder an der Traverse 63 sitzt und deren Kolbenstange 74 mit der Traverse 71 verbunden ist. Beim Aus- und Einfahren der Kolbenstange 74 mit nicht dargestellten an sich bekannten Antriebsmitteln wird die Niederhalteeinrichtung 52 entsprechend auf- und abbewegt.

Es liegt im Rahmen der Erfindung, den Vorstapelschacht und/oder den Ablegeschacht mit an sich bekannten Rüttlern oder Niederdrückeinrichtungen auszurüsten. Es liegt ferner im Rahmen der Erfindung, anstelle eines vor- und zurück- sowie auf- und abfahrbaren Tragarms bzw. der am Tragarm 1 hin- und herfahrbaren Ablegestation eine Einrichtung zu verwenden, die die Palette unter der Ablegestation entsprechend verfährt. Mit der Ablegestation werden dann die gestapelten Produkte mit ihrer Transportlage oder in einer vorher gewählten gedrehten Lage auf der positionierten Palette abgelegt. Zudem liegt im Rahmen der Erfindung, die Seitenwandeinrichtungen des Vorstapelschachts und des Ablegeschachts parallel nach außen oder innen verschiebbar auszubilden, um den Innenraum des Schachts auf unterschiedliche Abmessungen der zu stapelnden Produkte einzurichten. Anstelle der Niederhaltestangen 69 kann ein Wälzbandsystem verwendet werden, das entsprechend dem Wälzbandsystem 51 aufgebaut ist. Diese Ausführungsform der Niederhalteeinrichtung ist dann angebracht, wenn die zu stapelnden Produkte besonders glatt sind und/oder sich noch viel Luft zwischen und/oder innerhalb der Produkte befindet. Es kann aber auch ein paternosterartig angeordnetes Wälzbandsystem vorgesehen sein, bei dem

- 14 -

die Doppelwälzbänder gleichzeitig sowohl für das Niederhalten des Stapels im Ablegeschacht und für das Auflager für den zu bildenden Stapel im Vorstapelschacht dienen. Oder es können zwei Wälzbandsysteme sich gegenüberliegend angeordnet verwendet werden, die abwechselnd in den Innenraum zwischen Vorstapelschacht und Ablegeschacht eingefahren werden.

Wesentlich ist, daß mit der erfindungsgemäßen Vorrichtung nahezu jedes Setzbild verwirklicht werden kann, so daß nicht nur formstabile Stapel, sondern auch formstabile Ablagen auf einer Palette durchgeführt werden können, die individuell auf das zu stapelnde Produkt abgestimmt sein können. Die Produkte werden auf direktem Wege zum vorbestimmten Platz auf der Palette mittels eines teleskopartig ausziehbaren, schwenk- und nachführbaren Transportbandes befördert, in einem sich anschließenden Schacht vorgestapelt und von dort mittels eines Schwenkrahmens in der gewünschten Winkel- und Koordinatenstellung abgelegt. Das Wälzbandsystem sorgt dabei für ein besonders schonendes Kontaktieren der Produkte. Der gewünschte Drehwinkel für die Produkte kann automatisch eingestellt werden, wozu das Antriebsmittel 45 dient. Dabei wird automatisch der Nachführwinkel berücksichtigt, den der Vorstapelschacht bei einer bestimmten Stellung am Tragarm einnimmt.

Die gestapelten Produkte müssen nicht auf Paletten abgelegt werden, sondern können auch anderen Transportsystemen wie z.B. Transportbändern zugeführt werden, wobei die erfindungsgemäße Vorrichtung immer dann verwendet wird, wenn die Stapel mit unterschiedlichen Dreh-

- 15 -

winkeln weiterverarbeitet werden sollen. Selbstverständlich ist es auch möglich, innerhalb eines Stapels Produkte unterschiedlich gedreht anzuordnen, d.h. nach z.B. einer Aufnahme eines halben Stapels den Ablegeschacht um 180° zu drehen und den nächsten Teil des Stapels aufzunehmen und beide anschließend gemeinsam abzulegen. Ein solches Palettierverfahren war bisher nicht möglich.

Anstelle von Wälzbändern können auch Wälzrollen verwendet werden, die den gleichen Zweck erfüllen.

4319/I/R

A n s p r ü c h e

1. Vorrichtung zum Stapeln und/oder Palettieren von insbesondere dünnen Produkten eines Druckereibetriebes, g e k e n n z e i c h n e t   d u r c h eine um eine vertikale Achse (16) drehbare Sammel- und Ablegestation (13).

2. Vorrichtung nach Anspruch 1, d a d u r c h   g e - k e n n z e i c h n e t , daß die Sammel- und Ablegestation (13) einen Ablegeschacht (37) aufweist.

3. Vorrichtung nach Anspruch 1 und/oder 2, d a d u r c h g e k e n n z e i c h n e t , daß die Sammel-und Ablegestation (13) einen Vorstapelschacht (22) aufweist.

4. Vorrichtung nach einem oder mehreren der Ansprüche 1 bis 3, d a d u r c h   g e k e n n z e i c h - n e t , daß der Vorstapelschacht (22) senkrecht über dem Ablegeschacht (37) angeordnet ist.

5. Vorrichtung nach Anspruch 4, d a d u r c h   g e - k e n n z e i c h n e t , daß der Vorstapelschacht (22) unabhängig vom Ablegeschacht (37) um die vertikale Achse (16) drehbar gelagert ist.

- 2 -

6. Vorrichtung nach einem oder mehreren der Ansprüche 1 bis 5, d a d u r c h   g e k e n n z e i c h - n e t, daß die Sammel-und Ablegestation (13) unter einer Tragplatte (15) der Vorrichtung angeordnet ist und die Tragplatte ein Loch (17) aufweist, das frei von einem Tragrohr (18) durchgriffen wird, das sich ein Stück weiter nach unten erstreckt, am oberen Ende des Tragrohrs (18) eine Kreisringscheibe (19) sitzt, die sich rechtwinklig zur Achse (16) erstreckt, und sich auf der Oberfläche der Tragplatte (15) abstützt, am unteren Ende des Tragrohrs (18) frontal eine Tragplatte (21) sitzt, unter der der Vorstapelschacht (22) angeordnet ist.

7. Vorrichtung nach Anspruch 6, d a d u r c h   g e - k e n n z e i c h n e t , daß die Kreisringscheibe (19) Gleitmittel (20) aufweist, die sich zwischen der Scheibe (19) und der Oberfläche der Tragplatte (15) befinden.

8. Vorrichtung nach Anspruch 6 und/oder 7, d a d u r c h   g e k e n n z e i c h n e t , daß der Vorstapelschacht (22) im wesentlichen durch einen vertikalen, unter der Tragplatte (21) sitzenden, U-förmigen Rahmen (23) gebildet wird, an dessen Seitenwandungen senkrecht nach unten ragend auf Abstand befindliche Begrenzungsstäbe (24) befestigt sind.

9. Vorrichtung nach einem oder mehreren der Ansprüche 6 bis 8, d a d u r c h   g e k e n n z e i c h - n e t , daß der Vorstapelschacht (22) an der Seite, an der die Produkte zugeführt werden sollen, eine

- 3 -

Art Schlitz (25) aufweist, durch den die Produkte in den Innenraum des Vorstapelschachts (22) gefördert werden.

10. Vorrichtung nach einem oder mehreren der Ansprüche 6 bis 9, d a d u r c h   g e k e n n z e i c h - n e t , daß der Vorstapelschacht (22) ein entfernbares Bodenlager für die Produkte aufweist.

11. Vorrichtung nach Anspruch 10, d a d u r c h   g e - k e n n z e i c h n e t , daß das Bodenlager (2) horizontale, sich gegenüberliegende, außerhalb des Vorstapelschachts (22) angeordnete Schwenklagerzapfen (35) aufweist, an denen senkrecht abgehend Finger (36) angeordnet sind, die die Zwischenräume zwischen den Stäben (24) durchgreifen und horizontal in den Vorstapelschacht (22) hineinragen.

12. Vorrichtung nach Anspruch 11, d a d u r c h   g e - k e n n z e i c h n e t , daß die Schwenklagerzapfen (35) um ihre horizontale Längsachse verschwenkbar gelagert sind.

13. Vorrichtung nach einem oder mehreren der Ansprüche 1 bis 12, d a d u r c h   g e k e n n z e i c h - n e t , daß der Ablegeschacht (37) um die vertikale Achse (16) um $90^{o}$ und/oder $180^{o}$ und/oder $270^{o}$, vorzugsweise nach beiden Seiten, zuzüglich oder abzüglich des Schleppwinkels, verdrehbar gelagert ist.

14. Vorrichtung nach Anspruch 13, d a d u r c h   g e - k e n n z e i c h n e t, daß zwischen der Tragplatte

Ò211404

- 4 -

(15) und der Tragplatte (21) ein Freiraum belassen ist, wobei außen am Tragrohr (18) drehbar um die vertikale Achse (16) ein Hängerahmen (38) lagert, der die Vorstapelschachtanordnung umgreift und den Ablegeschacht (37) trägt.

15. Vorrichtung nach Anspruch 14, d a d u r c h g e k e n n z e i c h n e t , daß der Hängerahmen (38) zwei horizontale, parallel auf Abstand beiderseits neben dem Tragrohr (18) angeordnete, obere Längsholme (39) aufweist, an deren einem Ende je ein vertikaler Distanzholm (46) angeordnet ist, die Distanzholme (46) am unteren Ende in jeweils einen unteren horizontalen Längsholm (47) übergehen und die unteren Längsholme (47) fluchtend unter den oberen Längsholmen (39) verlaufen.

16. Vorrichtung nach Anspruch 15, d a d u r c h g e k e n n z e i c h n e t , daß die Enden der unteren Längsholme (47) über einen Querholm (48) miteinander in Verbindung stehen, wobei vorzugsweise ein entsprechender Querholm auch für die oberen Längsholme (39) vorgesehen ist.

17. Vorrichtung nach Anspruch 15 und/oder 16, d a - d u r c h g e k e n n z e i c h n e t , daß ein weiterer Querholm (49) zwischen den unteren Längsholmen (47) im Bereich der rückwärtigen vertikalen Holme (46) eingebracht ist.

18. Vorrichtung nach einem oder mehreren der Ansprüche 13 bis 17, d a d u r c h   g e k e n n z e i c h - n e t , daß auf den Holmen (39) eine Kreisringscheibe (40) horizontalliegend befestigt ist, die außenseitig eine Verzahnung (41) trägt, wobei die zentrale Öffnung (42) der Kreisringscheibe (40) vom Tragrohr (18) frei durchgriffen wird und zwischen Kreisringscheibe (40) und Tragrohr (18) ein Drehtraglager (43) angeordnet ist, das sowohl an der Kreisringscheibe (40) als auch am Tragrohr (18) festsitzt.

19. Vorrichtung nach Anspruch 18, d a d u r c h   g e - k e n n z e i c h n e t ,daß in den Drehkranz (41) ein Antriebszahnrad (44) eines Antriebsmittels (45) greift, das mit der Tragplatte (15) in Verbindung steht.

20. Vorrichtung nach einem oder mehreren der Ansprüche 13 bis 19, d a d u r c h   g e k e n n z e i c h - n e t , daß zur Bildung des Ablegeschachts (37), wie beim Vorstapelschacht (22), vertikale Stäbe (51a) innenseitig an den unteren Längsholmen (47) befestigt sind, wobei vorzugsweise die auf Abstand angeordneten Stäbe (51) mit den Stäben (24) des Vorstapelschachts (22) fluchten.

21. Vorrichtung nach einem oder mehreren der Ansprüche 1 bis 20, d a d u r c h   g e k e n n z e i c h - n e t , daß der Boden des Ablegeschachts (37) von einer Wälzbandeinrichtung (51) gebildet wird.

- 6 -

22. Vorrichtung nach Anspruch 21, d a d u r c h
g e k e n n z e i c h n e t , daß die Wälzbandeinrichtung (51) am Hängerahmen (38) und/oder am
Ablegeschacht (37) gelagert ist.

23. Vorrichtung nach Anspruch 21 und/oder 22, d a -
d u r c h g e k e n n z e i c h n e t , daß die
Wälzbandeinrichtung (51) mit vor- und zurückfahrbaren, horizontal ausgerüsteten Wälzbändern ausgerüstet ist.

24. Vorrichtung nach einem oder mehreren der Ansprüche
21 bis 23, d a d u r c h g e k e n n z e i c h -
n e t , daß die Wälzbandeinrichtung (51) auf- und
abfahrbar gelagert ist.

25. Vorrichtung nach einem oder mehreren der Ansprüche
21 bis 24, d a d u r c h g e k e n n z e i c h -
n e t , daß die Wälzbandeinrichtung (51) eine Niederhalteeinrichtung (52) aufweist.

26. Vorrichtung nach Anspruch 25, d a d u r c h g e -
k e n n z e i c h n e t , daß die Niederhaltevorrichtung eine Wälzbandeinrichtung ist.

27. Vorrichtung nach Anspruch 26, d a d u r c h g e -
k e n n z e i c h n e t , daß die Wälzbandeinrichtung
für das Niederhalten des Stapels der Wälzbandeinrichtung (51) entspricht.

28. Vorrichtung nach einem oder mehreren der Ansprüche
21 bis 27, d a d u r c h g e k e n n z e i c h -
n e t , daß die Wälzbandeinrichtung (51) mit einem
Doppelwälzband ausgerüstet ist.

- 7 -

29. Vorrichtung nach Anspruch 28, d a d u r c h
g e k e n n z e i c h n e t , daß das Doppelwälzband aus zwei oberen Wälzbändern (53) und einem
unteren Wälzband (54) besteht.

30. Vorrichtung nach Anspruch 29, d a d u r c h
g e k e n n z e i c h n e t , daß die oberen Wälzbänder (53) auf seitlichem Abstand angeordnet sind
und zwischen diesen das untere Wälzband (54) etwas
nach unten versetzt angeordnet ist.

31. Vorrichtung nach Anspruch 29 und/oder 30, d a -
d u r c h g e k e n n z e i c h n e t , daß der
obere Trum (53a) der oberen Wälzbänder (53) und
der untere Trum (54a) des unteren Wälzbandes (54)
beim Zurückziehen der Wälzbänder stillstehen bzw.
abgewälzt werden.

32. Vorrichtung nach einem oder mehreren der Ansprüche
21 bis 31, d a d u r c h g e k e n n z e i c h -
n e t ,daß die Bänder (53, 54) der Wälzbandeinrichtung (51) auf bzw. an einer Lagerplatte (56) lagern,
über der sich eine weitere kürzere, sich auf der
ersteren abstützende Lagerplatte (57) befindet,
wobei an der Rückwandung (57a) der Lagerplatte (57)
die oberen Wälzbänder (53) und an der Vorderfront
(56a) der Lagerplatte (56) das untere Wälzband (54)
befestigt ist, und wobei die sich bewegenden Trums
der Wälzbänder (53, 54) oder die Lagerelemente dieser Bänder mit einer Zug- bzw. Schubeinrichtung
(58) in Verbindung stehen.

- 8 -

33. Vorrichtung nach Anspruch 32, d a d u r c h
g e k e n n z e i c h n e t , daß die Zug- bzw.
Schubeinrichtung (58) aus einer auf der Lagerplatte
(56) befestigten Kolbenzylindereinheit (59) besteht,
deren Kolbenstange (60) an einem mit den sich bewegenden Trums bzw. mit den Führungselementen der Trums
in Verbindung stehenden Bügel (61) sitzt.

34. Vorrichtung nach einem oder mehreren der Ansprüche
21 bis 33, d a d u r c h g e k e n n z e i c h -
n e t , daß die Wälzbandeinrichtung (51) durch eine
außenliegende, seitliche Anordnung am Hängerahmen
(38) getragen wird.

35. Vorrichtung nach Anspruch 34, d a d u r c h
g e k e n n z e i c h n e t , daß Gleistangen (63)
vorgesehen sind, die auf seitlichem Abstand voneinander angeordnet sind und mit ihrem unteren Ende
in der Lagerplatte (57) und mit ihrem oberen Ende
in einer, vorzugsweise in der Draufsicht U-förmigen
Traverse (62) stecken, die Gleitstangen (63) je
einen Gleitblock (64) durchgreifen und die Gleitblöcke (64) an einem der unteren Längsholme (47)
oder an daran sitzenden, nach unten ragenden Lagerplatten (65) oder dgl. befestigt sind.

36. Vorrichtung nach Anspruch 35, d a d u r c h
g e k e n n z e i c h n e t , daß die etwa U-förmige
Ausnehmung (66) der Traverse (62) von einer vertikal
angeordneten, sich z.B. an der Traverse (62) oder
am Hängerahmen (38) abstützenden Kolbenzylindereinheit (67) durchgriffen wird, wobei die nach unten herausragende Kolbenstange (68) der Kolbenzylindereinheit (67) mit der Lagerplatte (57) verbunden ist.

37. Vorrichtung nach einem oder mehreren der Ansprüche
21 bis 36, d a d u r c h   g e k e n n z e i c h -
n e t , daß zwischen den Stäben (51 a) des Ablegeschachts (37) entsprechende Zwischenräume vorgesehen
sind, die von den Wälzbändern frei durchgriffen werden
können.

38. Vorrichtung nach einem oder mehreren der Ansprüche
21 bis 37, d a d u r c h   g e k e n n z e i c h -
n e t , daß die Niederhalteeinrichtung (52) über
den Wälzbändern (53, 54) horizontal ausgerichtete,
in Längsrichtung der Bänder weisende Stangen (69)
aufweist und vorzugsweise jeder Stab (69) am Kolben einer Kolbenzylindereinheit (70) sitzt, die horizontal an der
Traverse (71) lagert, die sich unter der Traverse
(62) befindet und auf- und abfahrbar gelagert ist.

39. Vorrichtung nach Anspruch 38, d a d u r c h
g e k e n n z e i c h n e t ,daß die Lagerung der
Niederhalteeinrichtung (52) an Gleitstangen erfolgt,
die auf Abstand voneinander und von den Gleitstangen
(63) angeordnet sind, die Traverse (71) durchgreifen
und in der Traverse (62) sowie in der Tragplatte
(57) stecken, wobei für die Auf- und Abbewegung eine
weitere Kolbenzylindereinheit (73) vorgesehen ist,
die vertikal nach unten ragend unter oder an der
Traverse (62) sitzt und deren Kolbenstange (74) mit
der Traverse (71) verbunden ist.

40. Vorrichtung nach einem oder mehreren der Ansprüche
3 bis 39, d a d u r c h g e k e n n z e i c h -
n e t , daß zum Antransport der Produkte (26) ein
teleskopartig aufgebautes, verlänger- bzw. verkürzbares Zuführtransportband (27) vorgesehen ist.

41. Vorrichtung nach Anspruch 40, d a d u r c h
g e k e n n z e i c h n e t , daß das Zuführtransportband (27) ein Oberbandsystem (28) und ein Unterbandsystem (29) aufweist.

42. Vorrichtung nach Anspruch 40 und/oder 41, d a -
d u r c h g e k e n n z e i c h n e t , daß das
Zuführtransportband (27) am Vorstapelschacht (22) gelagert und mit diesem um die Achse (16) drehbar ist.

43. Vorrichtung nach einem oder mehreren der Ansprüche
40 bis 42, d a d u r c h g e k e n n z e i c h -
n e t , daß das Zuführtransportband (27) im Einlaufbereich der Produkte um eine vertikale Achse (32)
und um eine quer zur Längserstreckung des Bandes
liegende, horizontale Achse (33) schwenkbar gelagert
ist.

44. Vorrichtung nach einem oder mehreren der Ansprüche
40 bis 43, d a d u r c h g e k e n n z e i c h -
n e t , daß das Zuführtransportband (27) am anderen
Ende um eine ebenfalls quer zur Längserstreckung
des Zuführbandes liegende, horizontale Achse (34)
schwenkbar ist.

45. Vorrichtung nach einem oder mehreren der Ansprüche 40 bis 44, d a d u r c h   g e k e n n z e i c h - n e t , daß das Zuführtransportband (27) zwischen der Achse (34) und dem Vorstapelschacht (22) einen horizontal angeordneten, mit dem Vorstapelschacht (22) verbundenen Bereich (27a) aufweist.

46. Vorrichtung nach einem oder mehreren der Ansprüche 40 bis 45, d a d u r c h   g e k e n n z e i c h - n e t , daß das Unterbandsystem (29) am Schlitz (25) endet und das Oberbandsystem (28) in den Innenraum des Vorstapelschachts (22) ragt.

47. Vorrichtung nach einem oder mehreren der Ansprüche 1 bis 46, d a d u r c h   g e k e n n z e i c h n e t, daß die Sammel-und Ablegestation (13) unter einem Tragarm (1) hängt, der sich horizontal erstreckt.

48. Vorrichtung nach Anspruch 47, d a d u r c h   g e - k e n n z e i c h n e t , daß an den Längsseiten des Tragarms (1) Führungsschienen (12) angeordnet sind, an denen Gleitblöcke (14) gelagert sind, die auf der horizontal angeordneten Tragplatte (15) befestigt sind, wobei sich die Tragplatte (15) mit geringem Abstand unter dem Tragarm (1) und unter der Tragplatte (15) die Sammel-und Ablegestationen (13) befinden.

49. Vorrichtung nach Anspruch 47 und/oder 48, d a - d u r c h   g e k e n n z e i c h n e t , daß der Tragarm (1) seitlich hin- und her- sowie auf- und abverfahrbar angeordnet ist.

50. Vorrichtung nach Anspruch 49, d a d u r c h g e k e n n z e i c h n e t , daß der Tragarm (1) mit einem Ende frontal gegen eine vertikal angeordnete, etwa plattenförmig ausgebildete Traverse (2) stößt und mit dieser fest verbunden ist, wobei die Traverse (2) horizontal ausgerichtete Schienenlager (2a) besitzt, die auf sich ebenfalls horizontal erstreckenden Schienen (3a) eines Schlittens (3) sitzen, an denen z.B. oben und unten die Schienen (3a) befestigt sind, wobei die Schienen (3a) über die Schienenlager (2a) die Traverse (2) mit dem Tragarm (1) tragen.

51. Vorrichtung nach Anspruch 49 und/oder 50, d a - d u r c h g e k e n n z e i c h n e t , daß der Schlitten (3) auf- und abfahrbar gelagert ist.

52. Vorrichtung nach Anspruch 51, d a d u r c h g e - k e n n z e i c h n e t , daß der Schlitten in oder an vertikalstehenden Säulen (4a, 4b) eines Maschinenrahmens (5) auf- und abfahrbar lagert.

53. Vorrichtung nach Anspruch 53, d a d u r c h g e - k e n n z e i c h n e t , daß der Maschinenrahmen (5) mit einer vor den Säulen (4a, 4b) unter dem Tragarm (1) auf dem Boden z.B. mit Stützen (7) ruhenden, sich quer bzw. senkrecht zum Tragarm (1) erstreckenden Rollenbahn (8) als Palettentransporteinrichtung kombiniert ist, über der sich auch in der Längserstreckung das Teleskopband (27) befindet.

54. Verfahren zum Stapeln und/oder Palettieren von insbesondere dünnen Produkten eines Druckereibetriebes, vorzugsweise unter Verwendung einer Vorrichtung nach einem oder mehreren der Ansprüche 1 bis 53, dadurch gekennzeichnet, daß die Produkte zur Bildung eines Vorstapels um eine zur Ebene der Produkte senkrechte Achse gedreht und anschließend aufeinanderliegend zum Stapel gesammelt werden, der Stapel in einen senkrecht unter dem Stapel angeordneten Ablegeschacht übergeben, im Ablegeschacht um mindestens die vorherige Drehung um dieselbe Achse zurückgedreht oder um 90, 180, 270° zuzüglich oder abzüglich der Vordrehung gedreht und danach abgelegt wird.

55. Verfahren nach Anspruch 54, dadurch gekennzeichnet, daß die Produkte für die Vordrehung auf einem Transportband seitlich verschwenkt werden.

56. Verfahren nach Anspruch 54 und/oder 55, dadurch gekennzeichnet, daß die Produkte mit der Sammel- und Ablegestation gedreht werden.

57. Verfahren nach einem oder mehreren der Ansprüche 54 bis 56, dadurch gekennzeichnet, daß die Produkte in eine Sammel- und Ablegestation gefördert werden, die in X-, Y- und Z-Richtung während des Sammelns verfahrbar angeordnet ist.

58. Verfahren nach einem oder mehreren der Ansprüche 54 bis 58, dadurch gekennzeichnet, daß die Produkte mit einem Teleskopband zur Sammel- und Ablegestation transportiert werden.

FIG.1

0211404

FIG.2